# EUROPÄISCHE PATENTSCHRIFT

(11) **EP 1 656 515 B1**
(45) Veröffentlichungstag und Bekanntmachung des Hinweises auf die Patenterteilung: **24.09.2008**
(21) Anmeldenummer: 04741281.2
(22) Anmeldetag: 27.07.2004
(51) Int. Cl.: F16H 61/32

(54) **GETRIEBESTELLER**
GEARING ACTUATOR
ACTIONNEUR DE BOITE DE VITESSES

(30) Priorität: 21.08.2003 DE 10338375
(43) Veröffentlichungstag der Anmeldung: 17.05.2006
(73) Patentinhaber: ZF FRIEDRICHSHAFEN Aktiengesellschaft, 88038 Friedrichshafen (DE)
(72) Erfinder: MIEHLE, Frank, 88090 Immenstaad (DE); NEUENFELD, Jürgen, 88045 Friedrichshafen (DE)
(86) Internationale Anmeldenummer: PCT/EP2004/008371
(87) Internationale Veröffentlichungsnummer: WO 2005/022008

(56) Entgegenhaltungen:
- EP-A- 0 481 168
- DE-A- 10 143 325

## Beschreibung

Die vorliegende Erfindung betrifft einen Getriebesteller für das vorzugsweise automatisierte Schaltgetriebe eines Kraftfahrzeuges nach dem Oberbegriff des Anspruchs 1.

Fahrzeuge mit automatisierten Schaltgetrieben finden eine immer größere Verbreitung. Dazu gehören in erster Linie kommerziell genutzte Fahrzeuge, wie Transporter und Lastwagen, wobei derartige automatisierte Schaltgetriebe in zunehmendem Maß auch in sportlich ausgelegten Personenwagen oder Kleinwagen eingesetzt werden. Ziel ist es, den Fahrer von den ständig erforderlichen Gangwechseln zu entlasten und einen komfortableren und zugleich sicheren Betrieb des Fahrzeuges zu ermöglichen.

Zu diesem Zweck steht üblicherweise dem Fahrer ein Fahrschalter für die Wahl der Betriebsart zur Verfügung, sodass er zwischen einem Automatikmodus, einem Handschaltmodus und einem Modus für den Rückwärtsgang wählen kann. Bei Auswahl des Automatikmodus erfolgt eine automatische Übersetzungsanpassung. Vor allem in den für Lastwagen bestimmten Getrieben bestehen mehrere Möglichkeiten für die Automatisierung der Schaltgetriebe. So können pneumatische, hydraulische oder elektrische Systeme verwendet werden. Die Auswahl hängt in erster Linie von der Fahrzeugklasse und den dafür erforderlichen Energiearten in den Fahrzeugen ab. Auch der Leistungsbedarf der benötigten Aktuatoren stellt eine wichtige Kenngröße dar. Systemabhängig kommen als Aktuatoren Pneumatikzylinder, Hydraulikzylinder oder Elektromotoren zum Einsatz, die über Stellglieder die Wähl- und Schalteinrichtungen beaufschlagen. Dabei sind von einem Elektromotor betätigbare Stellglieder derzeit die kostengünstigste Konstruktion.

Für die manuell schaltbaren Getriebe von Fahrzeugen besteht seit langem das Bedürfnis, diese mit einem automatisierungsfähigen elektromechanischen Getriebesteller nachzurüsten. Elektromechanische Getriebesteller für die Schaltvorgänge in einem Fahrzeuggetriebe sind wiederum seit langem bekannt. Diese kommen meistens in einem Getriebe zum Einsatz, das entweder zusammen mit dem Getriebesteller entwickelt worden ist oder das Adaptionselemente aufweist, die an das bestehende Getriebe anzubauen oder einzubauen sind, um mit dem Getriebesteller zusammenwirken zu können.

Ein typischer Getriebesteller ist zum Beispiel in der EP 0 377 848 B1 beschrieben. Dieser elektromechanische Getriebesteller weist zwei senkrecht zueinander angeordnete Bewegungsachsen auf. Ein einzelner Schaltfinger wird von zwei Elektromotoren auf den Bewegungsachsen geführt. Dabei greift der vom ersten Elektromotor bewegte Schaltfinger auf der einer Wählbewegung entsprechenden Bewegungsachse in jeweils eine Öffnung in den verschiedenen parallel nebeneinander angeordneten Schaltstangen ein. Zum Schalten eines mit jeweils einer Schaltstange verbundenen Schaltpakets wird durch Bewegung des Schaltfingers auf der zweiten Bewegungsachse die Schaltstange in Richtung ihrer Längsachse vom zweiten Elektromotor verschoben. Der Bewegungsmechanismus des Schaltfingers für die Bewegung entlang der beiden senkrecht zueinander angeordneten Bewegungsachsen entspricht zwar der Wähl- und Schaltvorgabe des manuellen Handschaltbildes sowie auch der Auswahl und der Verschiebung der jeweiligen Schaltstange, benötigt jedoch einen erheblichen Bauraum. Auch die Anzahl der für den Getriebesteller benötigten Bauteile ist groß.

Um diese Nachteile zu überwinden, wurde in der DE-A-101 43 325 der Anmelderin, welche den nächstliegenden stand der technik bildet, ein elektromechanischer Getriebesteller vorgeschlagen, der einen ersten Elektromotor für die Ausübung einer Wählbewegung einer Schalteinrichtung im Getriebe eines Kraftfahrzeuges aufweist, sowie einen zweiten Elektromotor zur Ausübung einer Schaltbewegung der Schalteinrichtung. Die dazugehörige Steuereinrichtung kann ganz oder teilweise im Getriebesteller integriert sein oder aber als externes Steuergerät ausgebildet sein. Die Drehachse des ersten Elektromotors und die Drehachse des zweiten Elektromotors liegen parallel zueinander.

Um die Drehbewegung der Elektromotoren in eine Linearbewegung umzusetzen, werden hierbei Kugelumlaufspindeln eingesetzt, die über eine Übersetzung vom zugehörigen Elektromotor angetrieben werden, die als Kegelradgetriebe, Stirnradgetriebe, Schneckengetriebe etc. ausgebildet sein können. Anstelle einer Kugelumlaufspindel mit auf ihr bewegbarer Kugelmutter kann auch ein Gewinde, eine Spindel oder eine Gewindespindel mit dazu korrespondierender Schraubenmutter eingesetzt werden.

Die im Zusammenhang mit einem bevorzugten Ausführungsbeispiel beschriebene Kugelumlaufspindel für die Schaltbewegung ist in einem Schaltzylinder zwischen zwei Federeinrichtungen, die in der Bewegungsrichtung der Kugelumlaufspindel wirken angeordnet. Dreht sich die Kugelumlaufspindel für die Schaltbewegung um ihre Achse, so wird die auf ihr angeordnete Kugelmutter in Axialrichtung bewegt und beaufschlagt dadurch die Federeinrichtung. Die Federeinrichtung wird als Kraftspeicher verwendet und verhindert eine Überlastung der Getriebeschaltung oder der Antriebseinheit mit dem Elektromotor und sorgt zugleich für eine schnelle Durchschaltung der Schiebemuffe nach Erreichen des Synchronpunktes.

Zur Abstützung des in die Kugelumlaufspindel eingeleiteten Drehmoments wird eine Schraube oder ein Stift verwendet, die oder der innerhalb des Schaltzylinders axial bewegbar ist, jedoch eine Relativverdrehung der Kugelmutter gegenüber dem Schaltzylinder verhindert. Die Kugelmutter, die Federeinrichtung und die Drehmomentabstützung werden vom Schaltzylinder aufgenommen.

Die Axialbewegung des Schaltzylinders kann über einen Zylinderstift oder eine Kugel-Zylinder-Paarung zur Verbindung des Schaltzylinders mit einem Umlenkhebel und einem Schaltfinger in eine senkrecht zur Bewegung des Schaltzylinders entlang der Kugelumlaufspindel verlaufende Schaltbewegung der Schalteinrichtung übersetzt werden. Eine Verdrehung von Schaltwelle und Schaltfinger zueinander kann durch eine kraft- oder formschlüssige Verbindung verhindert werden.

Wird die Kugelumlaufspindel für die Wählbewegung über den zugehörigen Elektromotor in eine Drehbewegung versetzt, so verschiebt sich die Kugelmutter auf der Kugelumlaufspindel in Axialrichtung. Der mit der Kugelmutter verbundene Wählfinger ist gegen Verdrehen gesichert. Wählfinger und Kugelmutter können dabei einstückig ausgebildet sein. Die Drehmomentabstützung kann durch eine Axialführung des Wählfingers im Gehäuse des Getriebestellers erfolgen.

Zwischen der Welle des Elektromotors und der Kugelumlaufspindel ist bei einem bevorzugten Ausführungsbeispiel eine Kreuzkupplung vorgesehen. Durch diese Kreuzkupplung oder auch eine andere kraft- oder formschlüssige Kupplung, wie zum Beispiel ein Mehrkant- oder Polygonprofil oder eine Rutschkupplung, soll ein Achsversatz zwischen der Drehwelle des Elektromotors und der Kugelumlaufspindel ausgeglichen werden. Die in der Kugelumlaufspindel auftretenden Axialkräfte werden durch eine Lagerung der Kugelumlaufspindel im Gehäuse des Getriebestellers aufgefangen und nicht auf die Drehwelle des Elektromotors übertragen.

Die herkömmlichen Kugelumlaufspindeln sowie die anderen herkömmlichen Bewegungsgewinde für Getriebesteller zur Umsetzung der rotatorischen Bewegung in eine translatorische Bewegung sind jedoch noch mit dem Nachteil behaftet, dass sie zwar Axialkräfte über einen langen Zeitraum sicher aufnehmen können, jedoch Radialkräfte oder Querkräfte nur in bedingtem Mass. Um die Querkräfte besser aufnehmen zu können und damit die Lebensdauer des Getriebestellers zu verlängern, wurden bereits Linearführungen eingesetzt, wie zum Beispiel Schwalbenschwanzführungen, Rundführungen, Flachführungen, Prismenführungen sowie deren Kombinationen. Diese Art der Führung hat jedoch in den meisten Fällen eine erhebliche negative Auswirkung auf den Wirkungsgrad. Üblicherweise werden sie nämlich parallel zur Achse des Bewegungsgewindes angeordnet und beanspruchen dadurch einen erheblichen Bauraum sowohl in der Breite als auch in der Höhe.

Aufgabe der vorliegenden Erfindung ist es, einen Getriebesteller zu schaffen, bei dem eine Abstützung der auftretenden Querkräfte auf die Spindelachse gewährleistet ist ohne dass ein zusätzlicher Bauraum in die Breite erforderlich ist.

Die Lösung dieser Aufgabe erfolgt mit den im Anspruch 1 angegebenen Merkmalen; vorteilhafte Ausgestaltungen sind in den Unteransprüchen beschrieben.

Erfindungsgemäß ist also vorgesehen, dass eine Einfachabstützung oder Mehrfachabstützung der Querkräfte in linearer Fortführung der Längsachse der Spindel auf einem Zylinder erfolgt und zwar unter Verwendung von Wälz- oder Gleitlagern, oder auch deren Kombination. Diese Art der Abstützung verlängert ausschließlich den bereits vorhandenen Bauraum des Getriebestellers in Längsrichtung, nicht jedoch in Querrichtung. Eine Verdrehsicherung wird dabei zusätzlich vorgesehen.

Die Einfach- oder Mehrfachabstützung der Spindel kann zum Beispiel durch eine Nadelhülse oder mehrere Nadelhülsen oder auch durch eine Kugelhülse oder mehrere Kugelhülsen erfolgen, die einen Abschnitt der zylindrischen Fortführung der Gewindespindel umgeben. Anstelle von Nadelhülsen oder Kugelhülsen bzw. von Nadellagern oder Kugellagern können auch eines oder mehrere Gleitlager verwendet werden.

Im Folgenden wird die Erfindung an Hand der Zeichnung näher erläutert, in der vorteilhafte Ausgestaltungen dargestellt sind; es zeigen:
- Fig. 1: schematisch einen Schnitt durch einen erfindungsgemäß ausgestalteten Getriebesteller in Einzelausführung und
- Fig. 2: schematisch einen Schnitt durch einen erfindungsgemäß ausgestalteten Getriebesteller in Doppelausführung.

Der Aufbau eines Getriebestellers ist dem Fachmann gut bekannt und wurde in der Beschreibungseinleitung ausführlich beschrieben, sodass in der Zeichnung nur die für das Verständnis der Erfindung notwendigen Teile mit Bezugszeichen versehen wurden.

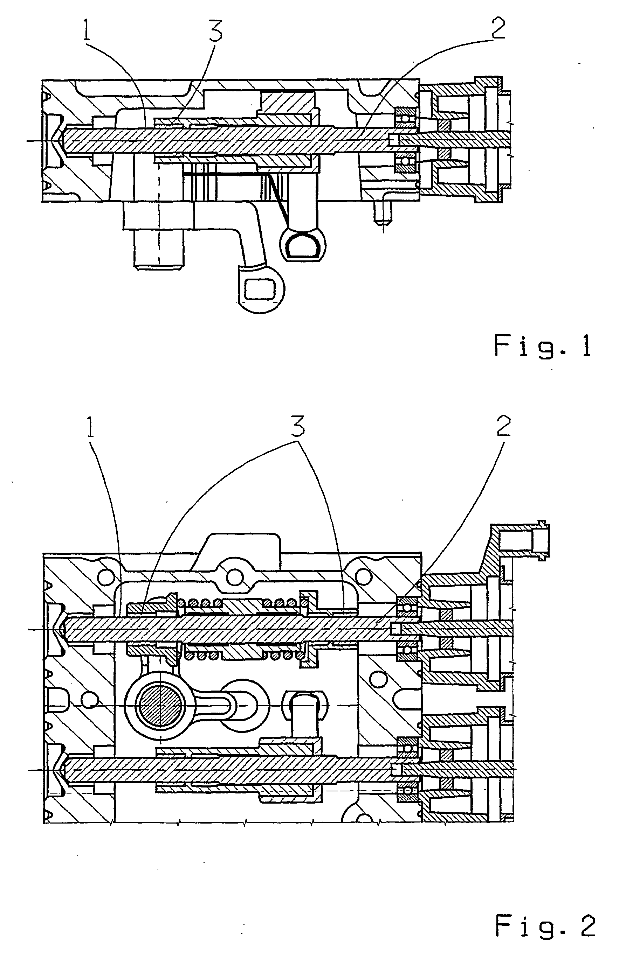

Fig. 1 zeigt schematisch einen Schnitt durch einen Getriebesteller, der eine Umsetzungseinrichtung für eine rotatorische Bewegung in eine translatorische Bewegung aufweist, deren Spindel mit 2 bezeichnet ist. Diese Spindel weist eine zylindrische Fortführung 1 auf, die zur Aufnahme der Querkräfte im Getriebesteller über eine Nadelhülse oder Kugelhülse 3 gelagert ist.

Bei dem in Fig. 1 dargestellten Ausführungsbeispiel ist der Getriebesteller eine Einzelausführung, das heißt, er weist nur eine Spindel und nur ein damit zusammenwirkendes Verschiebeteil auf, wobei auch nur ein nicht dargestellter Elektromotor zum Antrieb der Spindel 2 vorgesehen ist. Die Abstützung der Querkräfte erfolgt hierbei über eine Einfachabstützung mit nur einer Nadelhülse oder Kugelhülse 3. Anstelle von Nadelhülsen oder Kugelhülsen können auch Nadellager oder Kugellager vorgesehen sein oder gegebenenfalls Gleitlager.

Fig. 2 zeigt schematisch einen Schnitt durch einen Getriebesteller, dessen Spindel ebenfalls mit 2 bezeichnet ist. Diese Spindel weist ebenfalls eine zylindrische Fortführung oder Verlängerung 1 auf, die zur Aufnahme der Querkräfte im Getriebesteller über eine Nadelhülse oder eine Kugelhülse 3 gelagert ist.

Bei dem in Fig. 2 dargestellten Ausführungsbeispiel mit Mehrfachabstützung ist zu beiden Seiten der Spindel 2 je eine Fortführung 1 vorgesehen, wobei jede Fortführung in einer Nadelhülse oder Kugelhülse 3 gelagert ist. Der Getriebesteller hat hierbei eine Doppelfunktion, das heißt, er weist zwei parallel zueinander angeordnete Spindeln auf, die von zwei (nicht dargestellten) Elektromotoren zum Wählen und Schalten angetrieben werden, wie es näher in der eingangs erwähnten DE-A-101 43 325 der Anmelderin beschrieben ist. Jede Spindel ist in identischer Weise mit Fortführungen versehen, die in Nadelhülsen oder Kugelhülsen zur Aufnahme der Querkräfte gelagert ist, wobei jedoch nur die in der Zeichnung unten liegende Spindel mit ihren Fortführungen und Hülsen mit Bezugszeichen versehen ist.

Auch hierbei können anstelle der Nadelhülsen oder Kugelhülsen Nadellager oder Kugellager und gegebenenfalls auch Gleitlager eingesetzt werden.

Es ist klar, dass durch die erfindungsgemäße Ausgestaltung des Getriebestellers, wie bereits weiter oben erwähnt, kein zusätzlicher Bauraum für die Einfach- oder Mehrfachabstützung der Fortführungen mittels Nadelhülsen und/oder Kugelhülsen in Radialrichtung erforderlich ist, sondern nur in Axialrichtung. Vorzugsweise wird außerdem noch eine Verdrehsicherung vorgesehen.

### Bezugszeichen

- 1: Fortführung
- 2: Spindel
- 3: Lagerhülse

## Patentansprüche

1. Getriebesteller, insbesondere elektromechanischer Getriebesteller für ein automatisiertes Schaltgetriebe eines Kraftfahrzeuges, mit mindestens einer Antriebsvorrichtung für die Schalteinrichtung und/oder die Schaltbewegung im Getriebe und mit einer Anordnung zur Umsetzung der rotatorischen Bewegung der Antriebsvorrichtung in eine translatorische Bewegung der Anordnung, die eine Spindel und ein auf der Spindel bewegliches Verschiebeteil aufweist, **dadurch gekennzeichnet, dass** die Spindel (2) mit mindestens einer in Axialrichtung verlaufenden Fortführung (1) versehen ist, die zur Aufnahme von Querkräften wenigstens ein Lager (3) aufweist, mit dem die Querkräfte auf der Spindel (2) abstützbar sind.

2. Getriebesteller nach Anspruch 1, **dadurch gekennzeichnet, dass** die Lager (3) Nadelhülsen sind.

3. Getriebesteller nach Anspruch 1, **dadurch gekennzeichnet, dass** die Lager (3) Kugelhülsen sind.

4. Getriebesteller nach Anspruch 1, **dadurch gekennzeichnet, dass** die Lager (3) Gleitlager sind.

## Claims

1. Transmission actuator, especially an electromechanical transmission actuator for the automated manual transmission of a motor vehicle, with at least one driving device for the shifting device and/or the shifting motion in the transmission, and with an arrangement for conversion of the rotatory motion of the driving device into a translatory motion of the arrangement, which features a spindle and a movable sliding part on the spindle, **characterized in that** the spindle (2) features at least one extension (1) which runs in axial direction and is provided with at least one bearing (3) with which transverse forces can be supported on the spindle (2).

2. Transmission actuator according to claim 1, **characterized in that** the bearings (3) are needle bushes.

3. Transmission actuator according to claim 1, **characterized in that** the bearings (3) are spherical bushes.

4. Transmission actuator according to claim 1, **characterized in that** the bearings (3) are friction bearings.

## Revendications

1. Actionneur de boîte de vitesses, en particulier un actionneur de boîte de vitesses électromécanique pour une boîte mécanique automatisée d'un véhicule automobile, doté d'au moins un dispositif d'entraînement du dispositif de commande et/ou du mouvement de commande dans la boîte de vitesses, et d'un système pour convertir le mouvement rotatif du dispositif d'entraînement en un mouvement de translation du système, comportant un mandrin et une pièce coulissante positionnée sur le mandrin, **caractérisé en ce que** le mandrin (2) est doté d'au moins une rallonge (1) disposée en sens axial, celle-ci comportant au moins un roulement (3) pour supporter des forces transversales, ce roulement permettant de supporter les forces transversales sur le mandrin (2).

2. Actionneur de boîte de vitesses selon la revendication 1, **caractérisé en ce que** les roulements (3) sont des douilles à aiguilles.

3. Actionneur de boîte de vitesses selon la revendication 1, **caractérisé en ce que** les roulements (3) sont des douilles à billes.

4. Actionneur de boîte de vitesses selon la revendication 1, **caractérisé en ce que** les roulements (3) sont des paliers lisses.
